(19) Europäisches Patentamt / European Patent Office / Office européen des brevets

(11) **EP 3 872 690 B1**

(12) **EUROPEAN PATENT SPECIFICATION**

(45) Date of publication and mention of the grant of the patent:
**22.04.2026  Bulletin 2026/17**

(21) Application number: **19879551.0**

(22) Date of filing: **29.10.2019**

(51) International Patent Classification (IPC):
**G06V 20/56** *(2022.01)*  **G06V 10/28** *(2022.01)*
**G06V 10/25** *(2022.01)*  **G06V 10/44** *(2022.01)*
**G06V 10/764** *(2022.01)*

(52) Cooperative Patent Classification (CPC):
**G06V 10/28; G06V 10/25; G06V 10/443;**
**G06V 10/764; G06V 20/588**

(86) International application number:
**PCT/CN2019/114014**

(87) International publication number:
**WO 2020/088453 (07.05.2020 Gazette 2020/19)**

(54) **IMAGE PROCESSING METHOD AND APPARATUS USED FOR LANE DETECTION**

BILDVERARBEITUNGSVERFAHREN UND VORRICHTUNG ZUR FAHRSPURDETEKTION

PROCÉDÉ ET APPAREIL DE TRAITEMENT D'IMAGE UTILISÉS POUR LA DÉTECTION DE VOIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2018  CN 201811271573**

(43) Date of publication of application:
**01.09.2021  Bulletin 2021/35**

(73) Proprietor: **Great Wall Motor Company Limited**
**Baoding, Hebei 071000 (CN)**

(72) Inventor: **MIYAHARA, Shunji**
**Baoding, Hebei 071000 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
EP-A1- 2 879 110    CN-A- 104 102 905
CN-A- 104 217 427   CN-A- 105 261 020
CN-A- 107 301 776   CN-A- 107 590 470
CN-A- 107 862 290   US-A1- 2016 350 603

• LI-YONG MA ET AL: "A Lane Detection Technique Based on Adaptive Threshold Segmentation of Lane Gradient Image", 2018 4TH ANNUAL INTERNATIONAL CONFERENCE ON NETWORK AND INFORMATION SYSTEMS FOR COMPUTERS (ICNISC), IEEE, 19 April 2018 (2018-04-19), pages 182 - 186, XP033618983, DOI: 10.1109/ICNISC.2018.00043

EP 3 872 690 B1

# EP 3 872 690 B1

**Description**

TECHNICAL FIELD

The present invention relates to the field of intelligent transportation and image processing, and particularly relates to an image processing method and apparatus for lane detection.

BACKGROUND

At present, vehicles with (Autonomous driving (AD) function or Advanced Driver Assistance System (ADAS) have been gradually launched to the market, which greatly promote the development of intelligent transportation. For AD/ADAS, lane detection is critical, which is an important condition for AD/ADAS to judge.

In the related art, lane detection may be carried out through radar, visual camera (hereinafter referred to as camera), laser radar and ultrasonic sensor that support AD/ADAS. The camera is most widely used because the camera can obtain the same two-dimensional image information as human vision. However, when the camera is used for lane detection, although images about the lane can be captured successfully, the captured images contain various information about detected objects and environments, and these information are numerous and not all related to lane detection. Therefore, in the process of lane detection, image processing needs to be carried out on the images captured by the camera to extract required features.

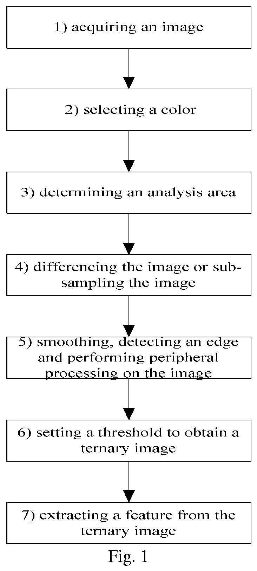

Fig. 1 is a flow chart of conventional lane detection. As shown in Fig. 1, the following image processing steps are usually included: 1) acquiring an image; 2) selecting a color; 3) determining an analysis area; 4) differencing the image or sub-sampling the image; 5) smoothing, detecting an edge and performing peripheral processing on the image; 6) setting a threshold to obtain a ternary image; and 7) extracting a feature from the ternary image, including edging, Hough transform, lane estimation and the like.

In the step 6), a single threshold is usually set to classify the difference images according to pixel points. For example, if a gray value of a certain point in the image is greater than the set threshold, the point is set to be white, otherwise the point is set to be black, thus obtaining the corresponding ternary image. Although the ternary image can be obtained through this threshold segmentation method, in practice, the lanes are often composed of dotted lines and solid lines. If a lower threshold is used, edges caused by the dotted lines can be detected, but a large number of noises may be picked up. If a higher threshold is used, edges caused by the dotted lines may be missed, that is, important feature points may be lost.

Up to now, there is no effective method in the prior art to avoid the loss of important feature points and suppress a large number of noise points in the image.

Non-patent Literature "A Lane Detection Technique Based on Adaptive Threshold Segmentation of Lane Gradient Image", published on April 19, 2018 by IEEE, provides a real-time lane detection based on adaptive threshold segmentation of lane gradient image.

US 2016/350603 A1 discloses a method for lane detection which includes generating an edge image including inbound edges of lane-markings corresponding to a road image. Based on an adaptive thresholding of intensity of lane-markings from image strips selected from the image, a plurality of lane masks are extracted. A plurality of valid lane masks are selected from the plurality of lane masks based on a structure and intensity information of the plurality of valid lane masks in the image strips. An overlap between the inbound edges and the valid lane masks is determined to identify a plurality of edge segments of the pair of inbound edges belonging to the lane-markings. A set of valid edge segments of the pair of inbound edges are obtained based on the curvature information of the edge segments.

CN 107 862 290 A discloses a lane detecting method that involves selecting road area from front image, obtaining effective image points in road area, and obtaining fitted lane line to perform extend and reverse inverse perspective transform process to obtain final lane

CN 104 102 905 A discloses a method for adaptive detection of lane line that involves classification of regions of interest, image segmentation based on hierarchical block, extraction of lane line features and de-interference processing and lane line confirmation.

SUMMARY

In view of the above, the present invention aims at providing an image processing method and apparatus for lane detection to at least partially solve the technical problems mentioned above.

To achieve the above object, the technical solutions of the present invention are realized as follows:

An image processing method for lane detection according to the present invention, as defined by independent claim 1, includes: acquiring a road image captured by a camera on a vehicle; determining a rectangular area covering a lane in the road image; determining an analysis area and a statistical area of the road image, wherein the analysis area is an area configured for performing the operation of acquiring a ternary image or a binary image, and the statistical area is an area configured for performing the operation of determining a threshold through statistical analysis, and the analysis area is covered by the rectangular area, wherein the statistical area is covered by the statistical area, and the statistical area is smaller than the rectangular area; performing difference processing on the rectangular area to acquire a corresponding difference image that has a positive edge and a negative edge of the lane, wherein, in the positive edge, a brightness value of a right pixel thereof is higher than that of a left pixel thereof, and wherein, in the negative edge, a brightness value of a left pixel thereof is higher than that of a right pixel thereof; dividing the difference image into a plurality of subareas independently comprising a solid line or a dotted line of the lane; determining a threshold matched with pixels of each subarea by performing the statistical analysis on a part of each subarea belonging to the statistical area; and processing the difference image of the corresponding subarea based on the determined threshold to acquire the corresponding ternary image or binary image. The step of, determining the threshold adapted to the pixels of each subarea comprises: performing statistical analysis of the pixels on the difference image of each subarea to obtain a statistical property of each subarea, and based on the statistical property, determining the threshold adapted to the pixels of the corresponding subarea. The step of, based on the statistical property, determining the threshold adapted to the pixels of the corresponding subarea comprises: obtaining cumulative distribution of the difference image of the corresponding subarea through statistical analysis, and taking a cumulative value of a set proportion as the threshold to be determined; or acquiring a number of edges in the difference image in a horizontal line through statistical analysis, and enabling a corresponding threshold point to be determined to ensure that the number of edges in the ternary image or the binary image in the horizontal line is the acquired number of edges.

Further, the step of, dividing the difference image into the plurality of subareas independently comprising the solid line or the dotted line of the lane includes: based on a center line of the rectangular area, dividing the difference image into a left subarea and a right subarea, and making the left subarea and the right subarea comprise the dotted line or the solid line of the lane, respectively.

Compared with the related art, the image processing method for lane detection according to the present invention has the following advantages: the image processing method for lane detection according to the present invention determines different thresholds for different areas including solid lines or dotted lines through a multi-area multi-threshold mode to acquire the corresponding ternary images based on the determined thresholds, thus solving a problem that the solid lines and the dotted lines are difficult to pick up through a single threshold in transfer lane detection, avoiding loss of important feature points and being beneficial for suppressing noise points.

Another object of the present invention aims at providing an image processing apparatus for lane detection to at least partially solve the technical problems mentioned above.

To achieve the above object, the technical solutions of the present invention are realized as follows:

An image processing apparatus for lane detection according to the present invention, as defined by independent claim 3, includes: an image acquiring module configured for acquiring a road image captured by a camera on a vehicle; an area dividing module configured for determining a rectangular area covering a lane in the road image, wherein the area dividing module is further configured for: determining an analysis area and a statistical area of the road image, wherein the analysis area is an area configured for performing the operation of acquiring a ternary image or a binary image, and the statistical area is an area configured for performing the operation of determining a threshold through statistical analysis, and the analysis area is covered by the statistical area, wherein the statistical area is covered by the rectangular area, and the statistical area is smaller than the rectangular area; a difference processing module configured for performing difference processing on the rectangular area to acquire a corresponding difference image that has a positive edge and a negative edge of the lane, wherein, in the positive edge, a brightness value of a right pixel thereof is higher than that of a left pixel thereof, and wherein, in the negative edge, a brightness value of a left pixel thereof is higher than that of a right pixel thereof; a subarea determining module configured for dividing the difference image into a plurality of subareas independently including a solid line or a dotted line of the lane; a threshold determining module configured for determining the threshold adapted to pixels of each subarea by performing the statistical analysis on a part of each subarea belonging to the statistical area; a threshold processing module configured for processing the difference image of the corresponding subarea based on the determined threshold to acquire the corresponding ternary image or binary image. The threshold determining module is configured for, determining the threshold adapted to the pixels of each subarea, comprising: performing statistical analysis of the pixels on the difference image of each subarea to obtain a statistical property of each subarea, and based on the statistical property, determining the threshold adapted to the pixels of the corresponding subarea. The threshold determining module is configured for, based on the statistical property, determining the threshold adapted to the pixels of the corresponding subarea, comprising: obtaining cumulative distribution of the difference image of the corresponding subarea through statistical analysis, and taking a cumulative value of a set proportion as the threshold to be determined; or acquiring a number of edges in the difference image in a horizontal line through statistical analysis, and enabling a corresponding threshold point to be determined to ensure that the number of edges in the ternary image or the binary image in the horizontal line is the acquired number of edges.

Further, the subarea determining module is configured for dividing the difference image into the plurality of subareas independently including the solid line or the dotted line of the lane, including: based on a center line of the rectangular area, dividing the difference image into a left subarea and a right subarea, and making the left subarea and the right subarea include the dotted line or the solid line of the lane, respectively.

Another aspect of the present invention further provide a machine-readable storage medium storing an instruction, wherein the instruction is configured for enabling a controller to perform the image processing method for lane detection mentioned above.

The image processing apparatus for lane detection and the machine-readable storage medium have the same advantages as that of the above-mentioned image processing method for lane detection relative to the prior art, which will not be elaborated herein.

Other features and advantages of the present invention will be described in detail in the subsequent detailed description section.

BRIEF DESCRIPTION OF THE DRAWINGS

The drawings constituting a part of the present invention are intended to provide a further understanding of the present invention. The illustrative embodiments of the present invention and the description thereof are intended to explain the present invention, and do not constitute an improper limitation of the present invention. In the drawings:

Fig. 1 is a flow chart of conventional lane detection;
Fig. 2 is a flow chart of an image processing method for lane detection according to an embodiment of the present invention;
Fig. 3(a) is a road image according to the embodiment of the present invention;
Fig. 3(b) is a schematic diagram of area dividing according to the embodiment of the present invention;
Fig. 3(c) is a difference image filtered by a Sobel filter according to the embodiment of the present invention;
Fig. 3(d) is a ternary image obtained by processing the difference image with a single threshold according to the embodiment of the present invention;
Fig. 3(e) is a ternary image obtained by processing the difference image with double thresholds according to the embodiment of the present invention;
Fig. 4(a) is an original image with a single threshold horizontal line according to the embodiment of the present invention;
Fig. 4(b) is a schematic diagram of a horizontal line-based difference image corresponding to Fig. 4(a);
Fig. 5 is a schematic diagram of a subarea determining solution according to the embodiment of the present invention;
Fig. 6(a) and Fig. 6(b) are schematic diagrams of lanes extracted by using a single threshold and double threshold respectively according to the embodiment of the present invention;
Fig. 7(a) and Fig. 7(b) are lane estimation results finally obtained by using the single threshold and the double thresholds respectively according to the embodiment of the present invention; and
Fig. 8 is a schematic structural diagram of an image processing apparatus for lane detection according to an embodiment of the present invention.

Description of Reference Numerals:

110 refers to image acquiring module, and 120 refers to area dividing module
130 refers to difference processing module and 140 refers to subarea determining module
150 refers to threshold determining module and 160 refers to threshold processing module

DETAILED DESCRIPTION

It should be noted that, in case of no conflict, the embodiments in the present invention and the features in the embodiments can be combined with each other.

The present invention will be explained in detail with reference to the accompanying drawings and embodiments hereinafter.

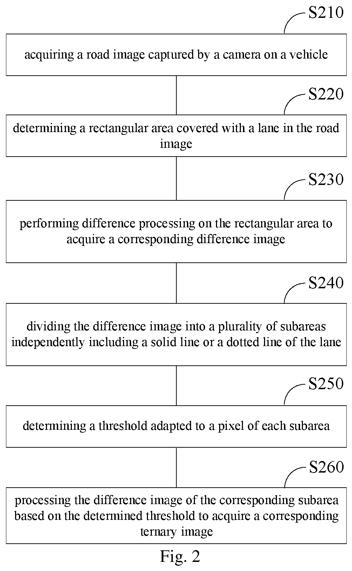

Fig. 2 is a flow chart of an image processing method for lane detection according to an embodiment of the present invention. As shown in Fig. 2, the image processing method may include the following steps of:
Step S210: acquiring a road image captured by a camera on a vehicle.

The road image refers to the image with a lane in front of the vehicle captured by the camera.

Step S220: determining a rectangular area covering a lane in the road image.

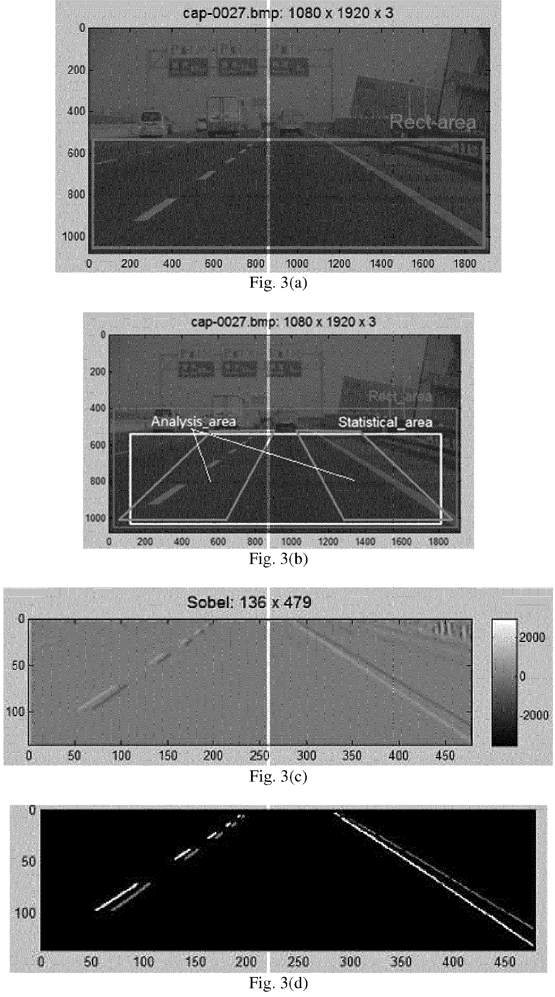

The rectangular area refers to an arbitrary rectangular simple area covering a lane in the road image. Fig. 3(a) shows the road image according to the embodiment of the present invention, wherein Rect_area represents the rectangular area. In addition, the steps 2) to 6) shown in Fig. 1 can be applied to this rectangular area. It should be noted that the rectangular area in the embodiment of the present invention is schematic, and areas with other shapes similar to the definition of the rectangular area should also be included in the scope of the embodiment of the present invention.

After the step of determining the rectangular area, the image processing method includes: determining an analysis area and a statistical area of the road image. The analysis area is an area configured for performing the operation of acquiring the ternary image or the binary image, and the statistical area is an area configured for performing the operation of determining the threshold through statistical analysis. Moreover, the statistical area is a subset of the rectangular area, and covers the analysis area. Fig. 3(b) is a schematic diagram of area dividing according to an embodiment of the present invention, wherein Rect_area represents the rectangular area, Analysis_area represents the analysis area, and Statistical_area represents the statistical area.

Here, the setting of the analysis area can reduce the difference processing and threshold processing involved in the subsequent steps from the rectangular area to the analysis area, which can not only ensure accurate lane information, but also help to reduce a data volume for image processing. Generally, the analysis area may be selected by relative values of a camera image in vertical and horizontal directions, and more specifically, determined by a ratio of the analysis area in the vertical and horizontal directions and camera specifications. Many methods for determining the analysis area are disclosed in the related art, so this part of contents is conventional for those skilled in the art and will not be repeated here. In the embodiment of the present invention, the analysis area can be performed, for example: a) because vehicles and roadside objects (such as walls, and electronic signal poles) will bring noisy signals, deleting a noisy area at a top of the rectangular area in the analysis area; b) providing proper edge distribution on the road; and c) providing simple distribution calculation.

In addition, the setting of the statistical area is to prepare for threshold determination in the subsequent steps, and belongs to the rectangular area which is relatively easy for statistical analysis, so that the threshold can be determined by statistical analysis.

It should be noted that the statistical area is the subset of the rectangular area, which makes the statistical area Statistical_area be reduced from the rectangular area Rect_area, so as to avoid peripheral areas which tend to have noise/unnecessary areas.

Step S230: performing difference processing on the rectangular area to acquire a corresponding difference image.

In a preferable embodiment, a Sobel filter may be adopted to perform difference filtering processing on the rectangular area to obtain the corresponding difference image. A typical Sobel filter is shown in the following equation (1).

$$\begin{bmatrix} -1 & 0 & 1 \\ -2 & 0 & 2 \\ -1 & 0 & 1 \end{bmatrix} \tag{1}$$

Fig. 3(c) is a difference image filtered by the Sobel filter according to the embodiment of the present invention, wherein a positive edge and a negative edge of the lane are created. In the positive edge, a brightness value of a right pixel thereof is higher than that of a left pixel thereof. In the negative edge, a brightness value of a left pixel thereof is higher than that of a right pixel thereof. An edge is a tiny area in the image in which a brightness (or gray level) is abrupt or discontinuous, that is, a boundary line between two areas with relatively different brightness values. Therefore, if an original image changes from dark to bright, the difference image is positive (expressed as a positive number in the equation (1), and a corresponding boundary line is a positive edge; if the original image changes from bright to dark, the difference image is negative (expressed as a negative number in the equation (1), and a corresponding boundary line is a negative edge. When the brightness of the original image does not change, the difference image may be zero. It should be noted that there are many introductions about edge detection technologies in the related art, and those skilled in the art may refer to the related art to understand the positive edge and the negative edge. Further, the brightness change of the original image and the positive or negative of the corresponding difference image may be determined by threshold setting, and the specific lane detection is taken as an example below. In conventional lane detection, the difference image as shown in Fig. 3(c) is segmented by a single threshold. For example, it is set that the threshold is *threshold,* and *ddd* (m, n) and *ttt*(*m,* n) are the difference images and the ternary image respectively, then:

ddd(m, n) < - *threshold ttt*(*m,* n) = -1 , corresponding to the negative edge in the ternary image; and
ddd(m, n) > + *threshold* ttt(m, n) = 1, corresponding to the positive edge in the ternary image;

$$\text{otherwise,} \ \ ttt(m, n) = 0 \tag{2}$$

For example, when *ttt(m,n)*=-1, it corresponds to black (black means "dark"), and when *ttt(m,n)*=1, it corresponds to white (white means "bright"), then the resulting ternary image is as shown in Fig. 3(d).

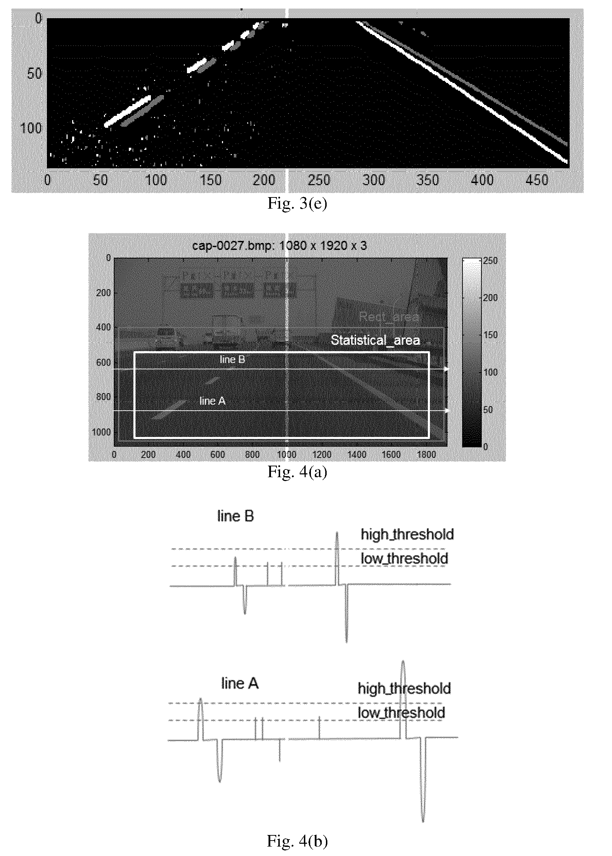

It can be seen that the finally obtained ternary image depends significantly on the threshold. However, referring to Fig. 3(a) again, it can be seen that the lane is composed of a solid line and a dotted line. If a low threshold is used in equation (2), edges caused by the dotted line can be detected, but a number of noise may be picked up; if a high threshold is used, edges caused by the dotted line may be missed. The reasons for this phenomenon will be explained through Fig. 4(a) and Fig. 4(b) below, wherein Fig. 4(a) is an original image with a single threshold horizontal line according to an embodiment of the present invention, wherein line A and line B represent two different horizontal lines, for example, pixels in the horizontal lines may be expressed by aaa(m, n), and the horizontal lines can correspond to {aaa(m, 1), aaa(m, 2), ..., aaa (m, NN)}, wherein NN is an end point of a horizontal axis, while line A and line B represent two horizontal lines with different m values, wherein aaa represents the original image. Fig. 4(b) is a schematic diagram of a horizontal line-based difference image corresponding to Fig. 4(a), wherein line A and line B have a high threshold high_threshold and a low threshold low_threshold respectively. For example, combined with the above equation (2), for the positive edge, if ddd(m,n) is greater than the threshold, the ternary image ttt(m,n) will be "1"; otherwise, the ternary image will be "0". In other words, if a high threshold is selected, the ternary image has a small number of "1" points, and thus has a smaller number of ternary image points. Therefore, it can be seen from Fig. 4(b) that there are two main reasons for the phenomenon that "if a low threshold is used in equation (2), edges caused by the dotted line can be detected, but a number of noise may be picked up; if a high threshold is used, edges caused by the dotted line may be missed":

1) the solid line (referring to the right half of Fig. 4(b)) may have a plurality of difference points, some of which may have large difference values; and
2) the solid line (referring to the right half of Fig. 4(b)) may generally have a stronger edge than the dotted line (referring to the left half of Fig. 4(b)).

Therefore, different from the conventional single threshold solution, the embodiment of the present invention continues from the step S210 to step S230 above, and improves the subsequent threshold processing solution.

Step S240: dividing the difference image into a plurality of subareas independently including a solid line or a dotted line of the lane.

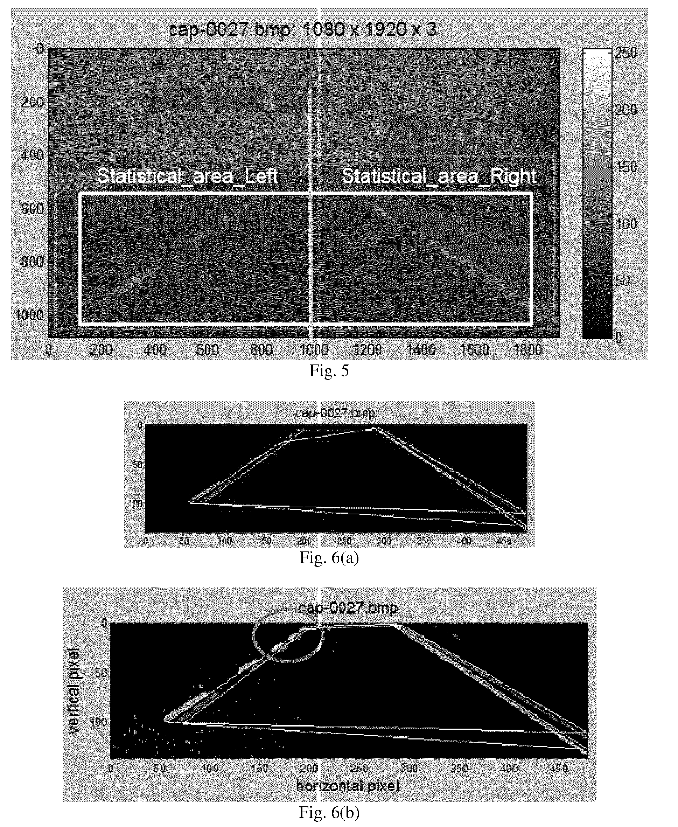

In a preferable embodiment, based on a center line of the rectangular area, the difference image may be divided into a left subarea and a right subarea, and the left subarea and the right subarea are made to include the dotted line or the solid line of the lane respectively. Fig. 5 illustrates this preferable subarea determining solution. As shown in Fig. 5, the rectangular area Rect_area is correspondingly divided into the left subarea Rect_area_left including the dotted line and the right subarea Rect_area_right including the solid line, and the statistical area Statistical_area is correspondingly divided into the left subarea Statistical_area_left including the dotted line and the right subarea Statistical_area_right including the solid line. Accordingly, the left side and the right side of the image can be processed independently, that is, the solid line and the dotted line can be processed independently.

It should be noted that the solution of dividing the left and right subareas based on the center line is exemplary, and in practice, a plurality of areas can be divided according to the actual situations.

Step S250: determining a threshold adapted to pixels of each subarea.

In a preferable embodiment, the determining the threshold adapted to the pixel of each subarea includes: performing statistical analysis of pixels on the difference image of each subarea to calculate a threshold adapted to pixels of the subarea.

In a case that the statistical area Statistical_area is divided, statistical analysis of pixels is performed on the part of each subarea belonging to the statistical area Statistical_area to obtain a statistical property of the corresponding statistical area, and finally the most suitable threshold is determined based on the statistical property. The embodiment of the present invention provides a method for automatically determining the threshold based on the statistical property, which includes any one of the following steps to automatically determine the threshold: a) through statistical analysis, obtaining cumulative distribution of the difference image of the corresponding subarea, for another example, taking 98% of a cumulative value as the threshold to be determined; and b) acquiring a number of edges in the ternary image in a horizontal line through statistical analysis, wherein, for example, the number of edges is 5 or 6, and the number of edges in the ternary image or the binary image in the horizontal line should be 5 or 6 corresponding to the threshold point to be determined.

Step S260: processing the difference image of the corresponding subarea based on the determined threshold to acquire a corresponding ternary image. In other words, for each subarea, a threshold adapted to the subarea is used to acquire the ternary image, instead of using a unified single threshold to acquire the ternary image.

Fig. 3(e) is a ternary image obtained by processing the difference image with double thresholds according to the embodiment of the present invention. Compared with the ternary image obtained with the single threshold in Fig. 3(d), it can be seen that the dotted line is enhanced and the edge points of the dotted line are more than those in Fig. 3(d).

Therefore, by adopting the image processing method according to the embodiments of the present invention, the dotted line can be stronger than the solid line, which is beneficial to the subsequent image processing such as feature point extraction of the ternary image.

It should be noted that, referring to Fig. 3(e), there are some noise points in the left half of the image, which may be caused by a low threshold, and can be processed by adjusting the threshold.

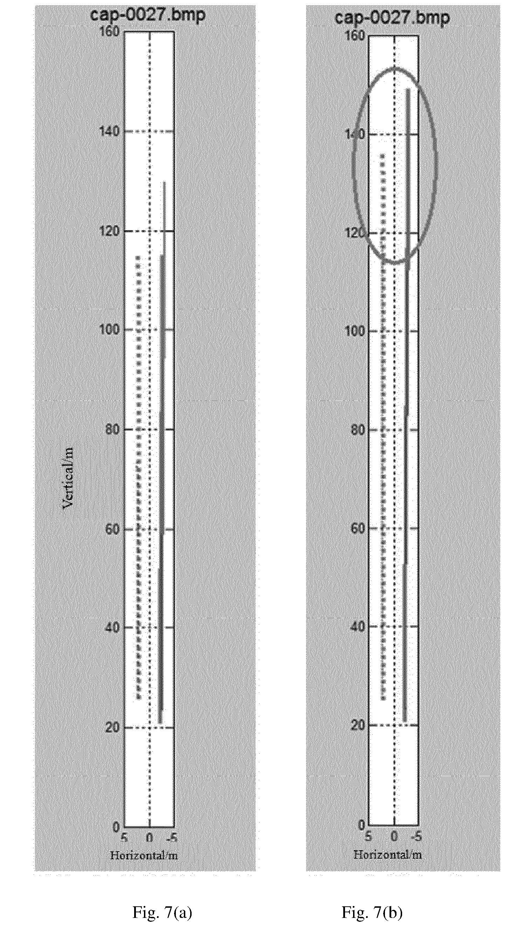

Furthermore, after obtaining the ternary image through the step S210 to step S260, the ternary image may be further subjected to feature extraction, edging, Hough transform, or the like, to complete lane estimation. In the embodiment of the present invention, the double thresholds are taken as an example, and Fig. 6(a) and Fig. 6(b) are schematic diagrams of lanes extracted by using a single threshold and double threshold respectively according to the embodiment of the present invention. It can be seen that a recognition effect of farther points in the dotted line is improved after adopting the double thresholds. Fig. 7(a) and Fig. 7(b) are lane estimation results finally obtained by using the single threshold and the double thresholds respectively. It can be seen that estimated ranges of the solid line and the dotted line are longer in the double thresholds than those in the single threshold.

In conclusion, the image processing method for lane detection a according to the embodiments of the present invention determines different thresholds for different areas including the solid lines or the dotted lines in the road image through a multi-area multi-threshold mode to acquire the corresponding ternary images or binary images, thus solving a problem that the solid lines and the dotted lines are difficult to pick up through a single threshold in transfer lane detection, avoiding loss of important feature points and being beneficial for suppressing noise points.

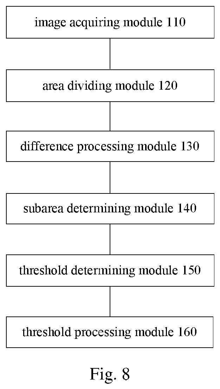

Based on the same inventive idea as the above image processing method, the embodiments of the present invention further provide an image processing apparatus for lane detection. Fig. 8 is a schematic structural diagram of the image processing apparatus according to an embodiment of the present invention. As shown in Fig. 8, the image processing apparatus may include: an image acquiring module 110 configured for acquiring a road image captured by a camera on a vehicle; an area dividing module 120 configured for determining a rectangular area covering a lane in the road image; a difference processing module 130 configured for performing difference processing on the rectangular area to acquire a corresponding difference image; a subarea determining module 140 configured for dividing the difference image into a plurality of subareas independently including a solid line or a dotted line of the lane; a threshold determining module 150 configured for determining a threshold adapted to pixels of each subarea; and a threshold processing module 160 configured for processing the difference image of the corresponding subarea based on the determined threshold to acquire a corresponding ternary image or binary image.

In a preferable embodiment, the difference processing module 130 includes a Sobel filter, wherein the Sobel filter performs difference filtering processing on the rectangular area to obtain a corresponding difference image.

In a preferable embodiment, the subarea determining module 140 is configured for dividing the difference image into the plurality of subareas independently including the solid line or the dotted line of the lane, including: based on a center line of the rectangular area, dividing the difference image into a left subarea and a right subarea, and making the left subarea and the right subarea include the dotted line or the solid line of the lane respectively.

The threshold determining module 150 is configured for determining the threshold adapted to the pixel of each subarea, including: performing statistical analysis of pixels on the difference image of each subarea to obtain a statistical property of each subarea, and based on the statistical property, determining the threshold adapted to the pixel of the corresponding subarea.

In a preferable embodiment, the area dividing module 120 is further configured for: determining an analysis area and a statistical area of the road image, wherein the analysis area is an area configured for performing the operation of acquiring the ternary image or the binary image, and the statistical area is an area configured for performing the operation of determining the threshold through statistical analysis, and the analysis area is covered by the rectangular area.

In a more preferable embodiment, the statistical area is covered by the rectangular area and the statistical area is smaller than the rectangular area.

It should be noted that the implementation details and effects of the image processing apparatus according to the embodiments of the present invention are the same as or similar to those of the embodiments of the above-mentioned image processing method, and therefore will not be repeated here.

It should also be noted that the processing of the ternary image in the embodiment of the present invention is all adapted to the binary image. The embodiments of the present invention mainly take the ternary image as an example, and the processing of the binary image is not described in detail.

The above description is merely preferable embodiments of the present invention, and is not indented to limit the protection scope of the present invention.

Those skilled in the art can understand that all or part of the steps in the method for implementing the above embodiments can be completed by instructing related hardware through a program which is stored in a storage medium and includes a plurality of instructions to make a single chip, a chip or a processor execute all or part of the steps of the method described in each embodiment of this application. The foregoing storage medium includes: any medium that is capable of storing program codes such as a USB disk, a mobile hard disk, a Read-Only Memory (ROM), a Random Access Memory (RAM), a magnetic disk or an optical disk, and the like.

**Claims**

1. An image processing method for lane detection, wherein the image processing method for lane detection comprises:

   acquiring (S210) a road image captured by a camera on a vehicle;
   determining (S220) a rectangular area covering a lane in the road image;
   determining an analysis area and a statistical area of the road image, wherein the analysis area is an area configured for performing the operation of acquiring a ternary image or a binary image, and the statistical area is an area configured for performing the operation of determining a threshold through statistical analysis, and the analysis area is covered by the statistical area, wherein the statistical area is covered by the rectangular area, and the statistical area is smaller than the rectangular area;
   performing (S230) difference processing on the rectangular area to acquire a corresponding difference image that has a positive edge and a negative edge of the lane, wherein, in the positive edge, a brightness value of a right pixel thereof is higher than that of a left pixel thereof, and wherein, in the negative edge, a brightness value of a left pixel thereof is higher than that of a right pixel thereof;
   dividing (S240) the difference image into a plurality of subareas independently comprising a solid line or a dotted line of the lane;
   determining (S250) the threshold adapted to pixels of each subarea by performing the statistical analysis on a part of each subarea belonging to the statistical area; and
   processing (S260) the difference image of the corresponding subarea based on the determined threshold to acquire the corresponding ternary image or binary image,
   wherein the step of, determining the threshold adapted to the pixels of each subarea comprises:
   performing statistical analysis of the pixels on the difference image of each subarea to obtain a statistical property of each subarea, and based on the statistical property, determining the threshold adapted to the pixels of the corresponding subarea, and
   wherein the step of, based on the statistical property, determining the threshold adapted to the pixels of the corresponding subarea comprises:

      obtaining cumulative distribution of the difference image of the corresponding subarea through statistical analysis, and taking a cumulative value of a set proportion as the threshold to be determined; or
      acquiring a number of edges in the difference image in a horizontal line through statistical analysis, and enabling a corresponding threshold point to be determined to ensure that the number of edges in the ternary image or the binary image in the horizontal line is the acquired number of edges.

2. The image processing method for lane detection according to claim 1, wherein the step of, dividing the difference image into the plurality of subareas independently comprising the solid line or the dotted line of the lane comprises:
   based on a center line of the rectangular area, dividing the difference image into a left subarea and a right subarea, and making the left subarea and the right subarea comprise the dotted line or the solid line of the lane, respectively.

3. An image processing apparatus for lane detection, wherein the image processing apparatus for lane detection comprises:

   an image acquiring module (110) configured for, acquiring a road image captured by a camera on a vehicle;
   an area dividing module (120) configured for, determining a rectangular area covering a lane in the road image, wherein the area dividing module (120) is further configured for: determining an analysis area and a statistical area of the road image, wherein the analysis area is an area configured for performing the operation of acquiring a ternary image or a binary image, and the statistical area is an area configured for performing the operation of determining a threshold through statistical analysis, and the analysis area is covered by the statistical area, wherein the statistical area is covered by the rectangular area, and the statistical area is smaller than the rectangular area;
   a difference processing module (130) configured for, performing difference processing on the rectangular area to acquire a corresponding difference image that has a positive edge and a negative edge of the lane, wherein, in the positive edge, a brightness value of a right pixel thereof is higher than that of a left pixel thereof, and wherein, in the negative edge, a brightness value of a left pixel thereof is higher than that of a right pixel thereof;
   a subarea determining module (140) configured for, dividing the difference image into a plurality of subareas independently comprising a solid line or a dotted line of the lane;
a threshold determining module (150) configured for, determining the threshold adapted to pixels of each subarea by performing the statistical analysis on a part of each subarea belonging to the statistical area; and
a threshold processing module (160) configured for, processing the difference image of the corresponding subarea based on the determined threshold to acquire the corresponding ternary image or binary image, wherein the threshold determining module (150) is configured for, determining the threshold adapted to the pixels of each subarea, comprising:
performing statistical analysis of the pixels on the difference image of each subarea to obtain a statistical property of each subarea, and based on the statistical property, determining the threshold adapted to the pixels of the corresponding subarea, and
wherein the threshold determining module (150) is configured for, based on the statistical property, determining the threshold adapted to the pixels of the corresponding subarea, comprising:

obtaining cumulative distribution of the difference image of the corresponding subarea through statistical analysis, and taking a cumulative value of a set proportion as the threshold to be determined; or
acquiring a number of edges in the difference image in a horizontal line through statistical analysis, and enabling a corresponding threshold point to be determined to ensure that the number of edges in the ternary image or the binary image in the horizontal line is the acquired number of edges.

4. The image processing apparatus for lane detection according to claim 3, wherein the subarea determining module (140) is configured for, dividing the difference image into the plurality of subareas independently comprising the solid line or the dotted line of the lane, comprising:
based on a center line of the rectangular area, dividing the difference image into a left subarea and a right subarea, and making the left subarea and the right subarea comprise the dotted line or the solid line of the lane, respectively.

5. A machine-readable storage medium storing an instruction, wherein the instruction is configured for enabling a controller to perform the image processing method for lane detection according to any one of claims 1 to 2.

**Patentansprüche**

1. Bildverarbeitungsverfahren zur Fahrspurdetektion, wobei das Bildverarbeitungsverfahren zur Fahrspurdetektion umfasst:

Erfassen (S210) eines Straßenbildes, das durch eine Kamera an einem Fahrzeug aufgenommen wird;
Bestimmen (S220) eines rechteckigen Bereichs, der eine Fahrspur in dem Straßenbild abdeckt;
Bestimmen eines Analysebereichs und eines statistischen Bereichs des Straßenbildes, wobei der Analysebereich ein Bereich ist, der dazu eingerichtet ist, die Operation des Erfassens eines ternären Bildes oder eines binären Bildes durchzuführen, und der statistische Bereich ein Bereich ist, der dazu eingerichtet ist, die Operation des Bestimmens einer Schwelle durch statistische Analyse durchzuführen, und der Analysebereich durch den statistischen Bereich abgedeckt ist, wobei der statistische Bereich durch den rechteckigen Bereich abgedeckt ist, und der statistische Bereich kleiner als der rechteckige Bereich ist;
Durchführen (S230) einer Differenzverarbeitung an dem rechteckigen Bereich, um ein entsprechendes Differenzbild zu erfassen, das einen positiven Rand und einen negativen Rand der Fahrspur aufweist, wobei in dem positiven Rand ein Helligkeitswert eines rechten Pixels höher ist als der Helligkeitswert eines linken Pixels, und wobei in dem negativen Rand ein Helligkeitswert eines linken Pixels höher ist als der Helligkeitswert eines rechten Pixels;
Unterteilen (S240) des Differenzbildes in mehrere Teilbereiche, die unabhängig eine durchgezogene Linie oder eine Strichlinie der Fahrspur umfassen;
Bestimmen (S250) der an Pixel jedes Teilbereichs angepassten Schwelle mittels Durchführen der statistischen Analyse an einem Teil jedes Teilbereichs, der zu dem statistischen Bereich gehört; und
Verarbeiten (S260) des Differenzbildes des entsprechenden Teilbereichs auf der Grundlage der bestimmten Schwelle, um das entsprechende ternäre Bild oder binäre Bild zu erfassen, wobei der Schritt des Bestimmens der an die Pixel jedes Teilbereichs angepassten Schwelle umfasst:

Durchführen einer statistischen Analyse der Pixel auf dem Differenzbild jedes Teilbereichs, um eine statistische Eigenschaft jedes Teilbereichs zu erhalten, und auf der Grundlage der statistischen Eigenschaft, Bestimmen der an die Pixel des entsprechenden Teilbereichs angepassten Schwelle, und

wobei der Schritt des Bestimmens, auf der Grundlage der statistischen Eigenschaft, der an die Pixel des entsprechenden Teilbereichs angepassten Schwelle umfasst:

Erhalten einer kumulativen Verteilung des Differenzbildes des entsprechenden Teilbereichs durch statistische Analyse und Nehmen eines kumulativen Wertes eines eingestellten Anteils als die zu bestimmende Schwelle; oder

Erfassen einer Anzahl von Rändern in dem Differenzbild in einer horizontalen Linie durch statistische Analyse und Ermöglichen des Bestimmens eines entsprechenden Schwellenpunktes, um sicherzustellen, dass die Anzahl an Rändern in dem ternären Bild oder in dem binären Bild in der horizontalen Linie die erfasste Anzahl von Rändern ist.

2. Bildverarbeitungsverfahren zur Fahrspurdetektion nach Anspruch 1, wobei der Schritt des Unterteilens des Differenzbildes in die mehreren Teilbereiche, die unabhängig die durchgezogene Linie oder die Strichlinie der Fahrspur umfassen, umfasst:

auf der Grundlage einer Mittellinie des rechteckigen Bereichs, Unterteilen des Differenzbildes in einen linken Teilbereich und einen rechten Teilbereich, und Veranlassen, dass der linke Teilbereich und der rechte Teilbereich die Strichlinie bzw. die durchgezogene Linie der Fahrspur umfassen.

3. Bildverarbeitungsvorrichtung zur Fahrspurdetektion, wobei die Bildverarbeitungsvorrichtung zur Fahrspurdetektion umfasst:

ein Bilderfassungsmodul (110), das zum Erfassen eines Straßenbildes eingerichtet ist, das durch eine Kamera an einem Fahrzeug aufgenommen wurde;

ein Bereichsunterteilungsmodul (120), das eingerichtet ist zum Bestimmen eines rechteckigen Bereichs, der eine Fahrspur in dem Straßenbild abdeckt, wobei das Bereichsunterteilungsmodul (120) des Weiteren eingerichtet ist zum Bestimmen eines Analysebereichs und eines statistischen Bereichs des Straßenbildes, wobei der Analysebereich ein Bereich ist, der dazu eingerichtet ist, die Operation des Erfassens eines ternären Bildes oder eines binären Bildes durchzuführen, und der statistische Bereich ein Bereich ist, der dazu eingerichtet ist, die Operation des Bestimmens einer Schwelle durch statistische Analyse durchzuführen, und der Analysebereich durch den statistischen Bereich abgedeckt ist, wobei der statistische Bereich durch den rechteckigen Bereich abgedeckt ist, und der statistische Bereich kleiner als der rechteckige Bereich ist;

ein Differenzverarbeitungsmodul (130), das eingerichtet zum Durchführen (130) einer Differenzverarbeitung an dem rechteckigen Bereich, um ein entsprechendes Differenzbild zu erfassen, das einen positiven Rand und einen negativen Rand der Fahrspur aufweist, wobei in dem positiven Rand ein Helligkeitswert eines rechten Pixels höher ist als der Helligkeitswert eines linken Pixels, und wobei in dem negativen Rand ein Helligkeitswert eines linken Pixels höher ist als der Helligkeitswert eines rechten Pixels;

ein Teilbereichsbestimmungsmodul (140), das eingerichtet ist zum Unterteilen des Differenzbildes in mehrere Teilbereiche, die unabhängig eine durchgezogene Linie oder eine Strichlinie der Fahrspur umfassen;

ein Schwellenbestimmungsmodul (150), das dazu eingerichtet ist zum Bestimmen der an Pixel jedes Teilbereichs angepassten Schwelle mittels Durchführen der statistischen Analyse an einem Teil jedes Teilbereichs, der zu dem statistischen Bereich gehört; und

ein Schwellenverarbeitungsmodul (160), das eingerichtet ist zum Verarbeiten des Differenzbildes des entsprechenden Teilbereichs auf der Grundlage der bestimmten Schwelle, um das entsprechende ternäre Bild oder binäre Bild zu erfassen,

wobei das Schwellenbestimmungsmodul (150) eingerichtet ist zum Bestimmen der an die Pixel jedes Teilbereichs angepassten Schwelle, umfassend:

Durchführen einer statistischen Analyse der Pixel auf dem Differenzbild jedes Teilbereichs, um eine statistische Eigenschaft jedes Teilbereichs zu erhalten, und auf der Grundlage der statistischen Eigenschaft, Bestimmen der an die Pixel des entsprechenden Teilbereichs angepassten Schwelle, und

wobei das Schwellenbestimmungsmodul (150) eingerichtet ist zum Bestimmen, auf der Grundlage der statistischen Eigenschaft, der an die Pixel des entsprechenden Teilbereichs angepassten Schwelle, umfassend:

Erhalten einer kumulativen Verteilung des Differenzbildes des entsprechenden Teilbereichs durch statistische Analyse und Nehmen eines kumulativen Wertes eines eingestellten Anteils als die zu bestimmende Schwelle; oder

Erfassen einer Anzahl von Rändern in dem Differenzbild in einer horizontalen Linie durch statistische

**EP 3 872 690 B1**

Analyse und Ermöglichen des Bestimmens eines entsprechenden Schwellenpunktes, um sicherzustellen, dass die Anzahl an Rändern in dem ternären Bild oder in dem binären Bild in der horizontalen Linie die erfasste Anzahl von Rändern ist.

4.  Bildverarbeitungsvorrichtung zur Fahrspurdetektion nach Anspruch 3, wobei das Teilbereichsbestimmungsmodul (140) eingerichtet ist zum Unterteilen des Differenzbildes in die mehreren Teilbereiche, die unabhängig die durchgezogene Linie oder die Strichlinie der Fahrspur umfassen, umfassend:
    auf der Grundlage einer Mittellinie des rechteckigen Bereichs, Unterteilen des Differenzbildes in einen linken Teilbereich und einen rechten Teilbereich, und Veranlassen, dass der linke Teilbereich und der rechte Teilbereich die Strichlinie bzw. die durchgezogene Linie der Fahrspur umfassen.

5.  Maschinenlesbares Speichermedium, das eine Instruktion speichert, wobei die Instruktion dazu eingerichtet ist, einen Controller in die Lage zu versetzen, das Bildverarbeitungsverfahren zur Fahrspurdetektion nach einem der Ansprüche 1 und 2 durchzuführen.

**Revendications**

1.  Procédé de traitement d'image pour la détection de voie, dans lequel le procédé de traitement d'image pour la détection de voie comprend :

    l'acquisition (S210) d'une image d'une route capturée par une camera sur un véhicule ;
    la détermination (S220) d'une zone rectangulaire couvrant une voie dans l'image de la route ;
    la détermination d'une zone d'analyse et d'une zone statistique de l'image de la route, dans lequel la zone d'analyse est une zone configurée pour réaliser l'opération d'acquisition d'une image ternaire ou d'une image binaire, et la zone statistique est une zone configurée pour réaliser l'opération consistant à déterminer un seuil par le biais d'une analyse statistique, et la zone d'analyse est couverte par la zone statistique, dans lequel la zone statistique est couverte par la zone rectangulaire, et la zone statistique est plus petite que la zone rectangulaire ;
    la réalisation (S230) d'un traitement de la différence sur la zone rectangulaire pour acquérir une image de la différence correspondante qui présente un bord positif et un bord négatif de la voie, dans lequel, dans le bord positif, une valeur de luminosité d'un pixel droit correspondant est supérieure à celle d'un pixel gauche correspondant, et dans lequel, dans le bord négatif, une valeur de luminosité d'un pixel gauche correspondant est supérieure à celle d'un pixel droit correspondant ;
    la division (S240) de l'image de la différence en une pluralité de sous-zones comprenant indépendamment une ligne pleine ou une ligne en pointillés de la voie ;
    la détermination (S250) du seuil adapté aux pixels de chaque sous-zone en réalisant l'analyse statistique sur une partie de chaque sous-zone appartenant à la zone statistique ; et
    le traitement (S260) de l'image de la différence de la sous-zone correspondante sur la base du seuil déterminé pour acquérir l'image ternaire ou l'image binaire correspondante,
    dans lequel l'étape consistant à déterminer le seuil adapté aux pixels de chaque sous-zone comprend :

    la réalisation d'une analyse statistique des pixels sur l'image de la différence de chaque sous-zone afin d'obtenir une propriété statistique de chaque sous-zone, et sur la base de la propriété statistique, la détermination du seuil adapté aux pixels de la sous-zone correspondante, et
    dans lequel l'étape consistant, sur la base de la propriété statistique, à déterminer le seuil adapté aux pixels de la sous-zone correspondante comprend :

    l'obtention d'une distribution cumulative de l'image de la différence de la sous-zone correspondante par le biais d'une analyse statistique, et la prise en compte d'une valeur cumulative d'une proportion établie comme le seuil à déterminer ; ou
    l'acquisition d'un nombre de bords dans l'image de la différence dans une ligne horizontale par le biais d'une analyse statistique, et l'habilitation de la détermination d'un point de seuil correspondant afin de s'assurer que le nombre de bords dans l'image ternaire ou dans l'image binaire dans la ligne horizontale est le nombre de bords acquis.

2.  Procédé de traitement d'image pour la détection de voie selon la revendication 1, dans lequel l'étape consistant à diviser l'image de la différence en la pluralité de sous-zones comprenant indépendamment la ligne pleine ou la ligne en pointillés de la voie comprend :

sur la base d'une ligne centrale de la zone rectangulaire, la division de l'image de la différence en une sous-zone gauche et une sous-zone droite, et la provocation que la sous-zone gauche et la sous-zone droite comprennent la ligne en pointillés ou la ligne pleine de la voie, respectivement.

3. Appareil de traitement d'image pour la détection de voie, dans lequel l'appareil de traitement d'image pour la détection de voie comprend :

un module d'acquisition d'image (110) configuré pour acquérir une image d'une route capturée par une caméra sur un véhicule ;

un module de division de zone (120) configuré pour déterminer une zone rectangulaire couvrant une voie dans l'image de la route, dans lequel le module de division de zone (120) est en outre configuré pour déterminer une zone d'analyse et une zone statistique de l'image de la route, dans lequel la zone d'analyse est une zone configurée pour réaliser l'opération consistant à acquérir une image ternaire ou une image binaire, et la zone statistique est une zone configurée pour réaliser l'opération consistant à déterminer un seuil par le biais d'une analyse statistique et la zone d'analyse est couverte par la zone statistique, dans lequel la zone statistique est couverte par la zone rectangulaire et la zone statistique est plus petite que la zone rectangulaire ;

un module de traitement de la différence (130) configuré pour réaliser un traitement de la différence sur la zone rectangulaire afin d'acquérir une image de la différence correspondante qui présente un bord positif et un bord négatif de la voie, dans lequel, dans le bord positif, une valeur de luminosité d'un pixel droit correspondant est supérieure à celle d'un pixel gauche correspondant, et dans lequel, dans le bord négatif, une valeur de luminosité d'un pixel gauche correspondant est supérieure à celle d'un pixel droit correspondant ;

un module de détermination de sous-zone (140) configuré pour diviser l'image de la différence en une pluralité de sous-zones comprenant indépendamment une ligne pleine ou une ligne en pointillés de la voie ;

un module de détermination de seuil (150) configuré pour déterminer le seuil adapté aux pixels de chaque sous-zone en réalisant l'analyse statistique sur une partie de chaque sous-zone appartenant à la zone statistique ; et

un module de traitement de seuil (160) configuré pour traiter l'image de la différence de la sous-zone correspondante sur la base du seuil déterminé pour acquérir l'image ternaire ou l'image binaire correspondante, dans lequel le module de détermination de seuil (150) est configuré pour déterminer le seuil adapté aux pixels de chaque sous-zone, comprenant :

la réalisation d'une analyse statistique des pixels sur l'image de la différence de chaque sous-zone afin d'obtenir une propriété statistique de chaque sous-zone, et sur la base de la propriété statistique, la détermination du seuil adapté aux pixels de la sous-zone correspondante, et

dans lequel le module de détermination de seuil (150) est configuré, sur la base de la propriété statistique, pour déterminer le seuil adapté aux pixels de la sous-zone correspondante, comprenant :

l'obtention d'une distribution cumulative de l'image de la différence de la sous-zone correspondante par le biais d'une analyse statistique, et la prise en compte d'une valeur cumulative d'une proportion établie comme seuil à déterminer ; ou

l'acquisition d'un nombre de bords dans l'image de la différence dans une ligne horizontale par le biais d'une analyse statistique, et l'habilitation de la détermination d'un point de seuil correspondant afin de s'assurer que le nombre de bords dans l'image ternaire ou l'image binaire dans la ligne horizontale est le nombre de bords acquis.

4. Appareil de traitement d'image pour la détection de voie selon la revendication 3, dans lequel le module de détermination de sous-zone (140) est configuré pour diviser l'image de la différence en la pluralité de sous-zones comprenant indépendamment la ligne pleine ou la ligne en pointillés de la voie, comprenant :
sur la base d'une ligne centrale de la zone rectangulaire, la division de l'image de la différence en une sous-zone gauche et une sous-zone droite, et la détermination que la sous-zone gauche et la sous-zone droite comprennent la ligne en pointillés ou la ligne pleine de la voie, respectivement.

5. Support de stockage lisible par une machine dans lequel est stockée une instruction, dans lequel l'instruction est configurée pour permettre à un dispositif de commande de réaliser le procédé de traitement de l'image pour la détection de voie selon l'une quelconque des revendications 1 à 2.

1) acquiring an image

↓

2) selecting a color

↓

3) determining an analysis area

↓

4) differencing the image or sub-sampling the image

↓

5) smoothing, detecting an edge and performing peripheral processing on the image

↓

6) setting a threshold to obtain a ternary image

↓

7) extracting a feature from the ternary image

Fig. 1

S210

acquiring a road image captured by a camera on a vehicle

S220

determining a rectangular area covered with a lane in the road image

S230

performing difference processing on the rectangular area to acquire a corresponding difference image

S240

dividing the difference image into a plurality of subareas independently including a solid line or a dotted line of the lane

S250

determining a threshold adapted to a pixel of each subarea

S260

processing the difference image of the corresponding subarea based on the determined threshold to acquire a corresponding ternary image

Fig. 2

Fig. 3(a)

Fig. 3(b)

Fig. 3(c)

Fig. 3(d)

Fig. 3(e)

Fig. 4(a)

Fig. 4(b)

Fig. 5

Fig. 6(a)

Fig. 6(b)

Fig. 7(a)                    Fig. 7(b)

image acquiring module 110

area dividing module 120

difference processing module 130

subarea determining module 140

threshold determining module 150

threshold processing module 160

Fig. 8

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016350603 A1
- CN 107862290 A
- CN 104102905 A

**Non-patent literature cited in the description**

- A Lane Detection Technique Based on Adaptive Threshold Segmentation of Lane Gradient Image. IEEE, 19 April 2018